# EUROPÄISCHE PATENTSCHRIFT

(11) **EP 2 356 347 B1**
(45) Veröffentlichungstag und Bekanntmachung des Hinweises auf die Patenterteilung: **08.04.2015**
(21) Anmeldenummer: 09749050.2
(22) Anmeldetag: 27.10.2009
(51) Int. Cl.: F16C 29/04, F16C 33/38, F16C 33/46, A47B 88/04

(54) **WÄLZKÖRPERKÄFIG FÜR EINE MÖBELAUSZUGSFÜHRUNG**
ROLLING BEARING CAGE FOR A FURNITURE PULL-OUT GUIDE
CAGE DE CORPS ROULANTS POUR RAIL DE TIROIR DE MEUBLE

(30) Priorität: 13.11.2008 DE 202008015070 U
(43) Veröffentlichungstag der Anmeldung: 17.08.2011
(73) Patentinhaber: Paul Hettich GmbH & Co. KG, 32278 Kirchlengern (DE)
(72) Erfinder: KLAUS, Stefan, 32257 Bünde (DE); HOFFMANN, Andreas, 32257 Bünde (DE)
(74) Vertreter: Specht, Peter
(86) Internationale Anmeldenummer: PCT/EP2009/064119
(87) Internationale Veröffentlichungsnummer: WO 2010/054929

(56) Entgegenhaltungen:
- EP-A1- 0 418 640
- DE-A1- 10 324 103
- DE-B3-102005 047 620
- DE-C1- 3 908 413
- DE-C1- 19 901 282
- DE-U1- 9 318 181
- US-A- 4 451 098
- US-B1- 7 104 692

## Beschreibung

Die vorliegende Erfindung betrifft einen Wälzkörperkäfig für eine Möbelauszugsführung gemäß dem Oberbegriff des Anspruchs 1 oder des Anspruchs 4.

Die aus dem Stand der Technik bekannten und derzeit eingesetzten Wälzkörperkäfige für Möbelauszugsführungen bestehen im Wesentlichen aus einteiligen gespritzten Käfigkörpern, die bereits als fertiger Käfig, d.h. in drei Dimensionen ausgerichtet gefertigt werden und in dieser Gestalt mit Wälzkörpern bestückt und auf eine Möbelauszugsführung aufgeschoben werden.

So ist aus der US 4,451,098 A ein Wälzkörperkäfig mit zwei zusammen setzbaren Seitenwänden bekannt, wobei die Seitenwände senkrecht zur Längserstreckung der Seitenwand vortretende Stege aufweisen, zwischen denen jeweils ein Wälzkörper gelagert ist. Zur Verbindung der beiden Seiten wände miteinander sind die Stege einer Seitenwand als Rastnasen ausgebildet, die Stufen in den Stegen der anderen Seitenwand hintergreifen.Nachteilig an diesen aus dem Stand der Technik bekannten Wälzkörperkäfigen ist, dass Wälzkörperkäfige nur von einfacher geometrischer Gestalt sein dürfen, um eine Bestückung mit Wälzkörpern und den Einbau der bestückten Wälzkörperkäfige in eine Möbelauszugsführung zu ermöglichen. Außerdem ist die Bestückung solcher Wälzkörperkäfige mit Wälzkörpern und der Einbau der bestückten Wälzkörperkäfige in eine Möbelauszugsführung nur in mehreren separaten Arbeitsschritten durchführbar.

Aus der DE 39 08 413 C1 ist ein Wälzkörperkäfig mit zwei zusammen setzbaren Seitenwänden bekannt, wobei die Seitenwände senkrecht zur Längserstreckung der Seitenwand vortretende Stege aufweisen, zwischen denen jeweils ein Wälzkörper gelagert ist. Zur Verbindung der beiden Seitenwände miteinander sind die Stege der Seitenwände übereinander legbar, wobei an den Stegen der einen Seitenwand den Stegen der anderen Seitenwand zugewandte Öffnungen vorgesehen sind, in die an den Stegen der anderen Seitenwand vorstehende Zapfen ragen. ist

Aufgabe der vorliegenden Erfindung ist es daher, einen Wälzkörperkäfig zu schaffen, der die oben genannten Nachteile beseitigt und insbesondere den Einbau in eine Möbelauszugsführung vereinfacht.

Diese Aufgabe wird durch einen Wälzkörperkäfig mit den Merkmalen des Anspruchs 1 und einen Wälzkörperkäfig mit den Merkmalen des Anspruchs 4 gelöst.

Vorteilhafte Weiterbildungen sind Gegenstand der Unteransprüche.

Erfindungsgemäß weist der Wälzkörperkäfig zwei als separate Bauteile ausgebildete Seitenwände auf, die entlang mindestens einer ihrer Längskanten formschlüssige, als radial zusammen fügbare Steckverriegelung ausgebildete Rastmittel aufweisen, mit denen die Seitenwände in einer den Wälzkörperkäfig bildenden Endstellung miteinander verrastbar sind, wobei die Steckverriegelung als an einander gegenüberliegenden Längskanten hervorstehende aufeinander legbare Stege ausgebildet sind, wobei mindestens einer der Stege eine Öffnung aufweist, in die im zusammengefügten Zustand ein senkrecht auf dem Steg an der Längskante der gegenüberliegenden Seitenwand hervorstehender Zapfen ragt, wobei der Zapfen (32) über die Oberfläche des Steges (25, 26) nach außen oder innen hinausragt. Auch mit dieser Bauform ist eine einfache Vorbestückung der einzelnen Bauteile des Wälzkörperkäfigs sowie ein einfacher Einbau des Wälzkörperkäfigs in eine Möbelauszugsführung ermöglicht. Ein Lösen der Verbindung beim Gegeneinander ziehen der Seitenteile ist hier außerdem wirksam verhindert.

Die radial zusammenfügbare Steckverriegelung erlaubt ein einfaches Zusammenfügen der einzelnen Seitenwände und gleichzeitig durch den Formschluss der Rastmittel eine genaue Positionierung der Seitenwände zueinander.

In einer alternativen Ausführungsvariante, bei der die Steckverriegelung als an einander gegenüberliegenden Längskanten hervorstehende aufeinander legbare Stege (36, 37) und neben den Stegen (36, 37) angeordneten Druckknopfteilen (38, 39) ausgebildet sind, wobei die Druckknopfteile(38, 39) aus einem kugelförmigen Kopf (39) auf der einen Längskante und aus einem Hohlzylinder (38) auf der gegenüberliegenden Längskante bestehen, wobei der kugelförmige Kopf (39) in den Hohlzylinder (38) einsteckbar ist. Ein Lösen der Verbindung beim Gegeneinander ziehen der Seitenteile ist auch bei dieser Ausführungsvariante wirksam verhindert.

Die Erfindung wird nachfolgend anhand von Ausführungsbeispielen mit Bezug auf die beigefügten Zeichnungen näher erläutert.

Es zeigen:
- Figuren 1 bis 10: eine erste Ausführungsform eines Wälzkörperkäfigs in unterschiedlichen schematischen Ansichten,
- Figuren 11 bis 15: eine zweite Ausführungsform eines Wälzkörperkäfigs in unterschiedlichen schematischen Ansichten
- Figuren 16 bis 20: eine weitere Ausführungsform eines Wälzkörperkäfigs in unterschiedlichen schematischen Ansichten,
- Figuren 21 bis 26: eine weitere Ausführungsform eines Wälzkörperkäfigs in unterschiedlichen schematischen Ansichten,
- Figuren 27 bis 30: eine weitere Ausführungsform eines Wälzkörperkäfigs in unterschiedlichen schematischen Ansichten,
- Figuren 31 bis 33: eine weitere Ausführungsform eines Wälzkörperkäfigs ohne eingesetzte Wälzkörper in unterschiedlichen schematischen Ansichten,
- Figuren 34 bis 36: die Ausführungsform des Wälzkörperkäfigs der Figuren 31 bis 33, diesmal mit schematisch dargestellten eingesetzten Wälzkörpern,
- Figuren 37 bis 39: eine weitere Ausführungsform eines Wälzkörperkäfigs in unterschiedlichen schematischen Ansichten ohne Darstellung der Wälzkörper,
- Figuren 40 bis 43: eine weitere Ausführungsform eines Wälzkörperkäfigs in unterschiedlichen schematischen Ansichten mit und ohne Wälzkörper,
- Figuren 44 bis 49: eine Ausführungsform eines Wälzkörperkäfigs in unterschiedlichen schematischen Ansichten,
- Figuren 50 bis 54: eine weitere Ausführungsform eines erfindungsgemäßen Wälzkörperkäfigs in unterschiedlichen schematischen Ansichten,
- Figuren 55 bis 59: eine weitere Ausführungsform eines erfindungsgemäßen Wälzkörperkäfigs in unterschiedlichen schematischen Ansichten,
- Figuren 60 bis 65: eine weitere Ausführungsform eines erfindungsgemäßen Wälzkörperkäfigs in unterschiedlichen schematischen Ansichten und
- Figuren 66 bis 71: eine weitere Ausführungsform eines Wälzkörperkäfigs in unterschiedlichen schematischen Ansichten.

In der nachfolgenden Figurenbezeichnung beziehen sich Begriffe wie oben, unten, links, rechts, vorne, hinten usw. ausschließlich auf die in den jeweiligen in den Figuren gewählte beispielhafte Darstellung und Position des Wälzkörperkäfigs und anderer Gegenstände. Diese Begriffe sind nicht einschränkend zu verstehen, das heißt in verschiedenen Arbeitsstellungen oder durch spiegelsymmetrische Auslegung oder dergleichen können sich diese Bezüge ändern.

Ein Wälzkörperkäfig für eine Möbelauszugsführung ist zwischen zwei zueinander verfahrbaren Schienen der Möbelauszugsführung angeordnet, wobei in dem Wälzkörperkäfig eine Vielzahl von Wälzkörpern, vorzugsweise in Gestalt von Kugeln oder Zylindern, geführt sind, um die eine Schiene an der anderen Schiene verfahrbar zu führen.

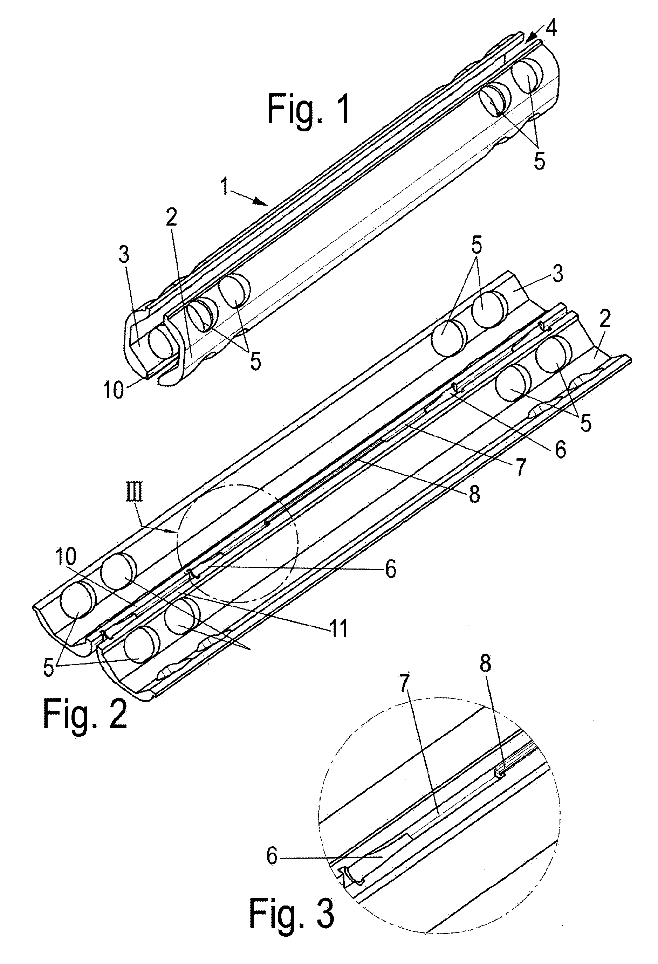

Die Figuren 1 bis 10 zeigen eine erste Ausführungsform eines Wälzkörperkäfigs 1 zur Aufnahme von kugelförmigen Wälzkörpern, der im Wesentlichen aus zwei Seitenwänden 2, 3 besteht, die entlang einer ihrer Längskanten 10, 11 durch einen Biegebereich miteinander verbunden sind. Die beiden Seitenwände 2, 3 weisen jeweils Wälzkörperführungen in Form von Aussparungen 5 auf, in denen (nicht gezeigte) Wälzkörper lagerbar sind. Die nicht durch einen Biegebereich miteinander verbundenen Längskanten der Seitenwände sind durch einen Spalt 4 voneinander getrennt, durch den die Aufhängung einer Schiene hindurchgreift.

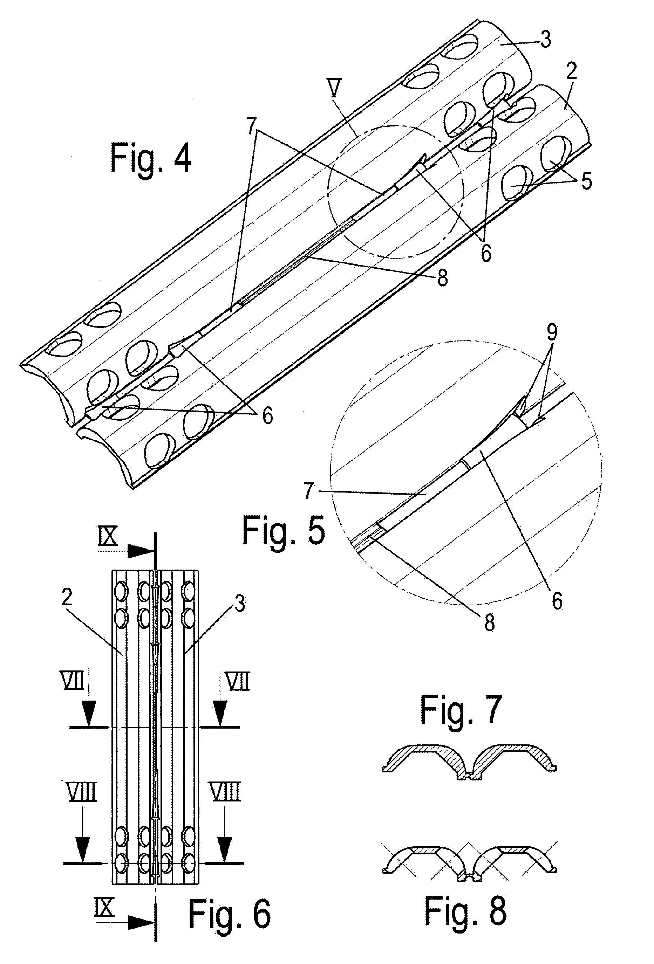

Wie besonders gut in den Figuren 3 und 5 gezeigt ist, welche jeweils Ausschnittsvergrößerungen der in Figur 2 mit III bezeichneten Einzelheit und in der Figur 4 mit V bezeichneten Einzelheit zeigen, weist der Biegebereich zwischen den Längskanten 10, 11 ein Filmscharnier 8, einen Spalt 7 sowie ein bistabiles Blattfederelement 6 auf. Dieses bistabile Blattfederelement 6 zeichnet sich durch zwei stabile Positionen aus, welche beide in einer Durchbiegungsrichtung senkrecht zu den Längskanten 10, 11 der Seitenwände 2, 3 ausgebildet sind. Mit Hilfe eines solchen bistabilen Blattfederelements 6 kann der Wälzkörperkäfig 1 zum einen stabil in seiner in den Figuren 2, 4, 6, 7 und 8 gezeigten aufgeklappten Position gehalten werden. Wenn die beiden Seitenwände 2, 3 nun zusammen gefaltet werden, muss zunächst eine gewisse Kraft auf die beiden Seitenwände 2, 3 in Faltrichtung ausgeübt werden, die einer Rückstellkraft des Blattfederelements 6 bzw. der Blattfederelemente 6 entgegenwirkt, bis ein Punkt erreicht ist, an dem die Blattfederelemente 6 einen Umkehrpunkt erreicht haben und sich anschließend von selbst in ihre zweite stabile Position verbiegen. Durch den Einsatz solcher bistabiler Blattfederelemente 6 ist damit eine einfache und effektive Positionierung der Seitenwände 2, 3 des Wälzkörperkäfigs 1 ermöglicht. Das besonders gut in den Figuren 2 bis 5 gezeigte Blattfederelement 6 ist als eine einen Spalt 7 zwischen beiden Seitenwänden 2, 3 überbrückende Matte mit seitlich hervorstehenden Flügeln 9 ausgebildet.

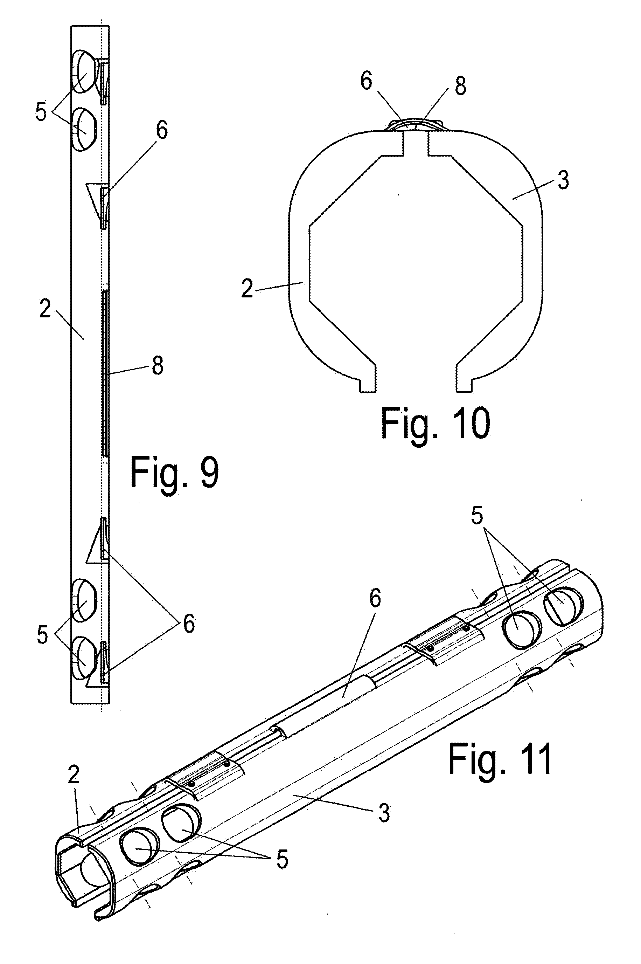

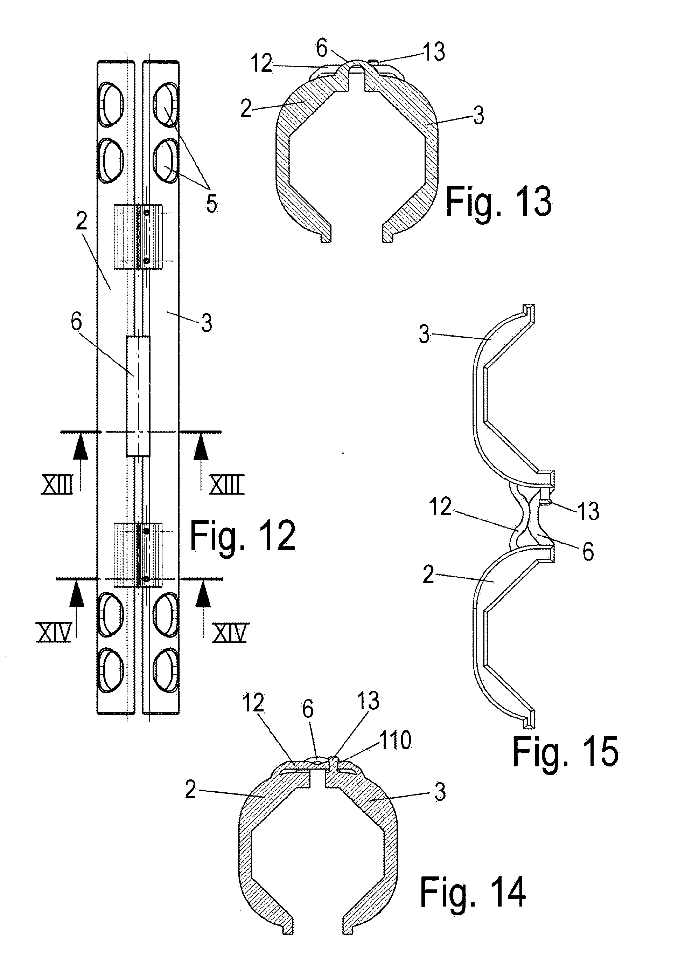

Die Figuren 11 bis 15 zeigen eine zweite Ausführungsform des erfindungsgemäßen Wälzkörperkäfigs 1. Diese ist im wesentlichen ähnlich aufgebaut wie der in den Figuren 1 bis 10 gezeigte Wälzkörperkäfig 1. Im Unterschied zu diesem ist hier nur ein bistabiles Blattfederelement 6 vorgesehen, das hier etwa auf halber Länge des Wälzkörperkäfigs 1 zentral angeordnet ist. Rechts und links des Blattfederelements 6 sind zusätzliche Rastelemente angeordnet. Diese zusätzlichen Rastelemente bestehen aus einem an den Seitenwänden des Wälzkörperkäfigs 1 anhaftenden elastischen Filmscharnier 12 sowie einem Druckknopf 13, der im zusammengefalteten Zustand der den Wälzkörperkäfig 1 bildenden Seitenwände 2, 3 durch eine Öffnung 110 in dem Filmscharnier 12 gesteckt ist. Die Spitze des Druckknopfs 13 ist dabei mit einem gegenüber dem Durchmesser des restlichen Druckknopfes 13 verbreiterten Kopf ausgebildet, der aus der elastisch ausgebildeten Öffnung 110 in dem Filmscharnier 12 heraussteht und dadurch die Position der Seitenwände 2, 3 zueinander zusätzlich verrastet.

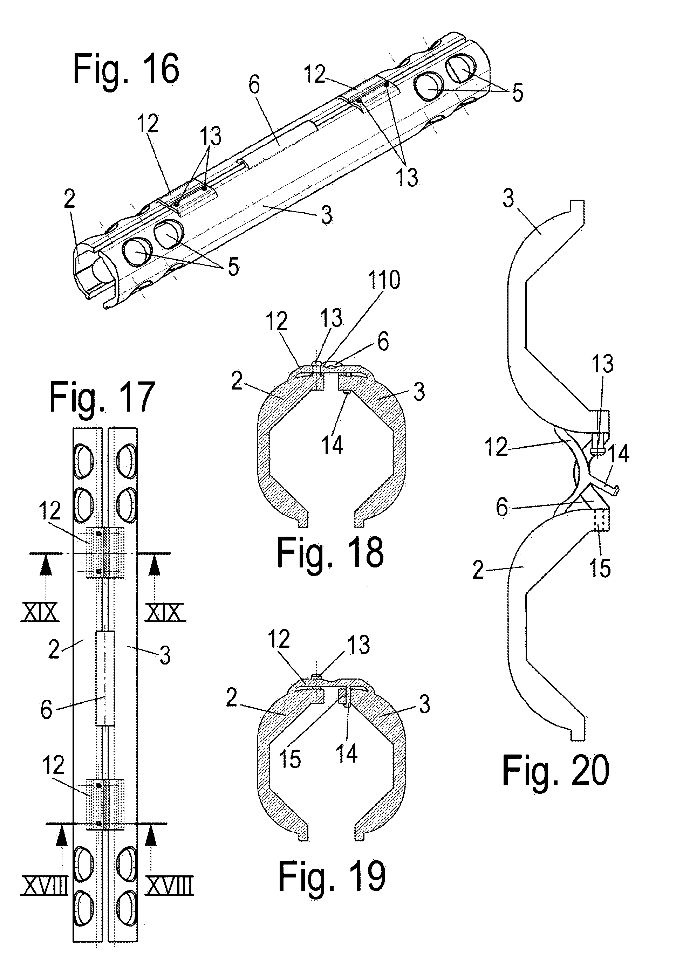

Bei der Ausführungsform, die in den Figuren 16 bis 20 dargestellt ist, ist zusätzlich zu der in den Figuren 11 bis 15 gezeigten Ausführungsform an dem Filmscharnier 12 zusätzlich ein Haken 14 angeordnet, welcher im zusammengeklappten Zustand der beiden Seitenwände 2, 3 durch eine Öffnung 15 der Seitenwand 3 hindurchtritt und diese auf ihrer Unterseite hintergreift und dadurch der gesamten Anordnung in der Endstellung des Wälzkörperkäfigs zusätzlichen Halt bietet.

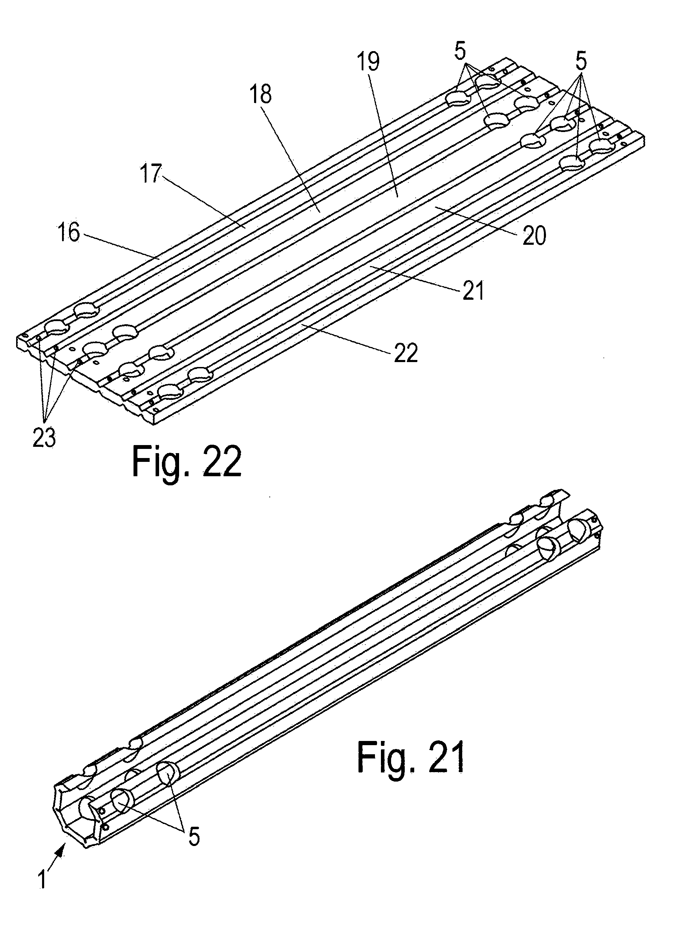

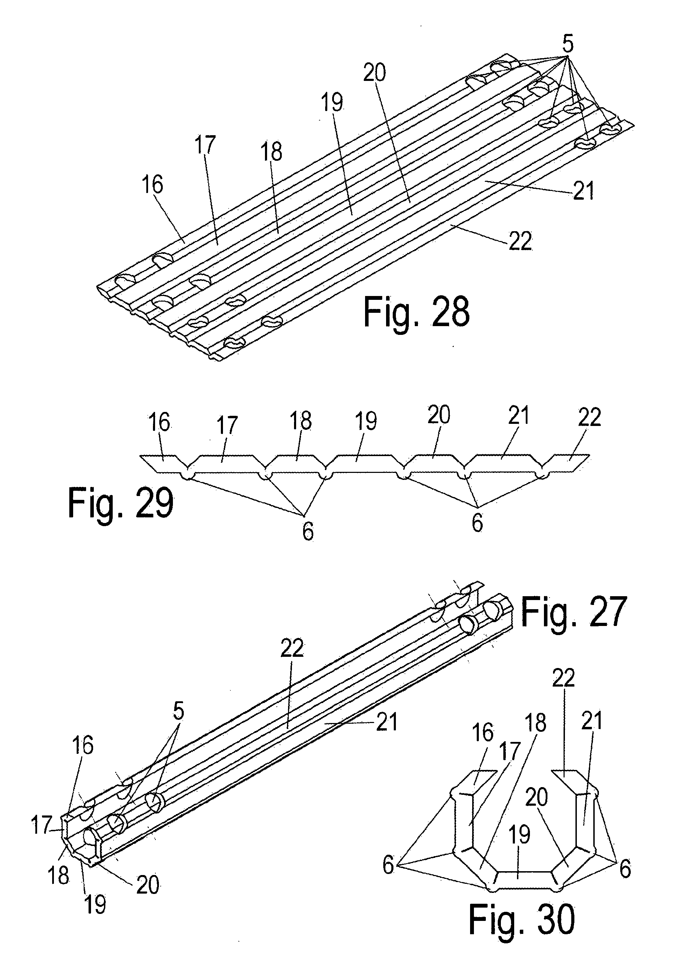

Bei den beiden in den Figuren 21 bis 30 gezeigten Ausführungsformen des Wälzkörperkäfigs 1 sind die Seitenwände aus mehreren Längsbahnen 16, 17, 18, 19, 20, 21, 22 gebildet, zwischen denen Biegebereiche mit Rastmitteln ausgebildet sind, durch die die einzelnen Längsbahnen in einer den Wälzkörperkäfig 1 in seiner Endstellung bildenden Form verrastbar sind. Die Biegebereiche sind in diesen Ausführungsformen so ausgebildet, dass zwischen den einzelnen Längsbahnen 16 bis 22 Abflachungen ausgebildet sind, wobei der Neigungswinkel der Abflachungen so gestaltet ist, dass die zueinander gefalteten Längsbahnen in der Endstellung des Wälzkörperkäfigs 1 mit den Abflachungen aneinander liegen. Wesentlicher Unterschied zwischen den hier gezeigten Ausführungsformen ist, dass die in den Figuren 21 bis 26 gezeigte Ausführungsform in beide Richtungen faltbar ist, während die Ausführungsform gemäß den Figuren 27 bis 30 nur in eine Richtung faltbar ist. So sind bei der Ausführungsform gemäß den Figuren 27 bis 30 die Abflachungen nur auf einer Seite der Längsbahnen ausgebildet, während die andere Seite der Biegebereiche zwischen den Längsbahnen als Blattfederelemente 6 mit zwei stabilen Positionen ausgebildet sind.

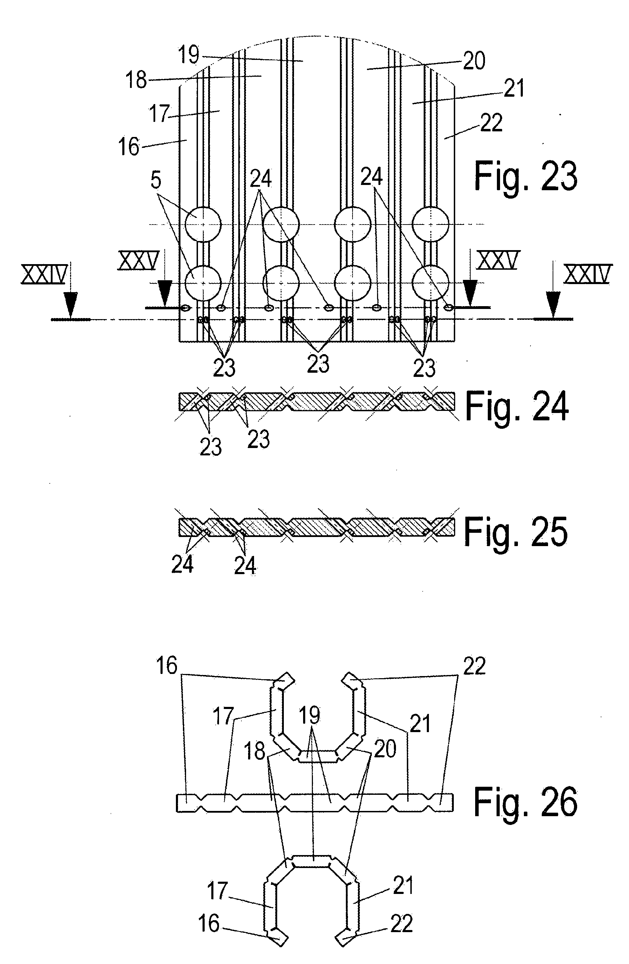

Die Verrastung bei der in den Figuren 21 bis 26 gezeigten Ausführungsform erfolgt durch Druckknöpfe 23, 24, welche, wie in den Figuren 23 bis 25 zu erkennen ist, in Faltrichtung jeweils in den jeweiligen Kerben angeordnet sind, so dass aus einander gegenüberliegenden, aufeinander zu zu faltende Kerbflächen jeweils ein Kopf eines Druckknopfs hervorsteht, der auf eine jeweilige den Kopf haltende Fassung an der gegenüber liegenden Kerbfläche aufsteckbar ist.

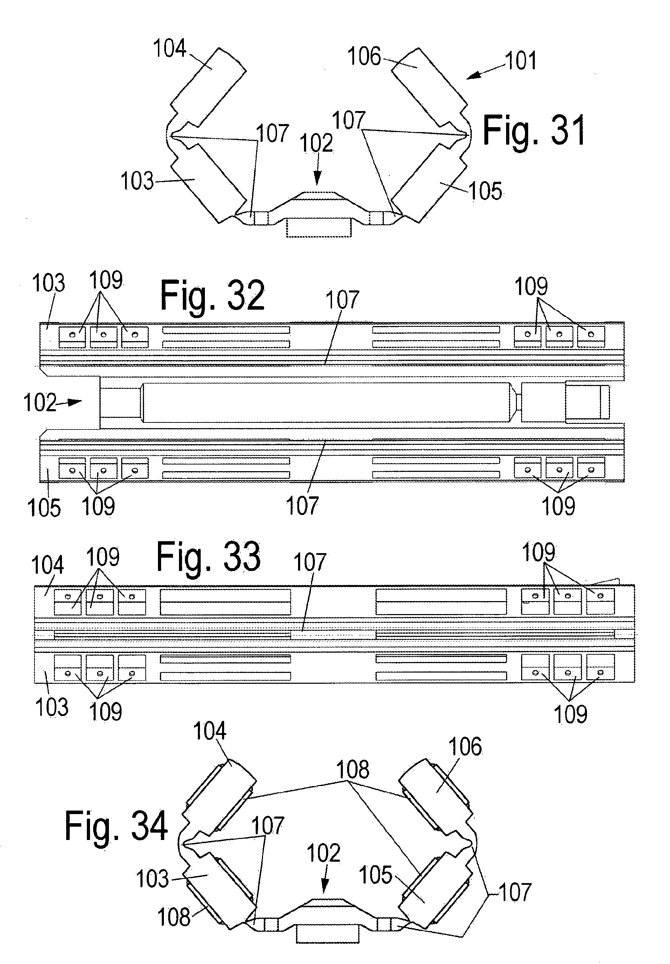

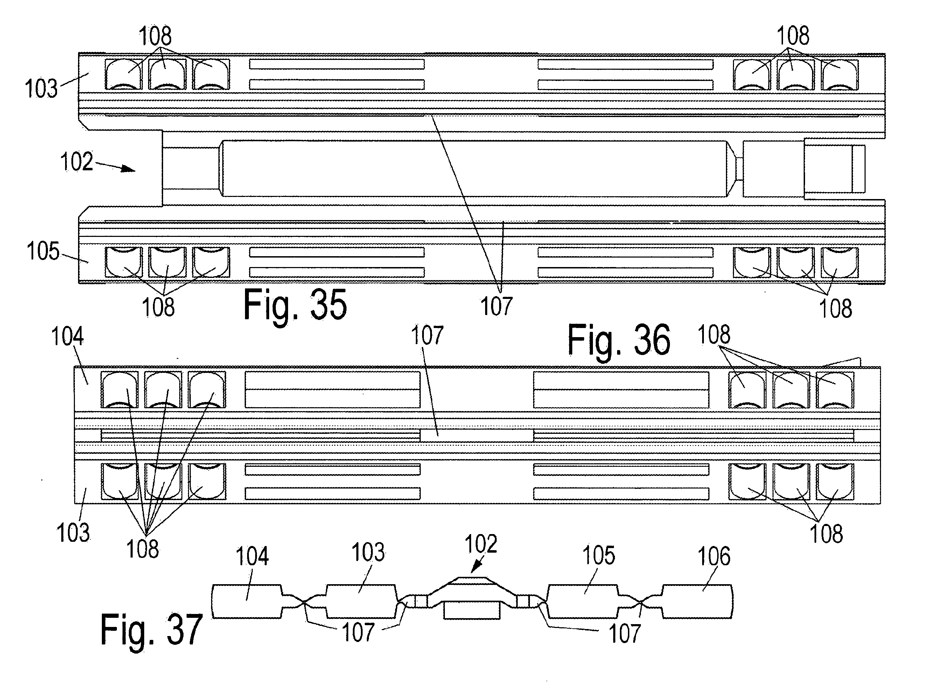

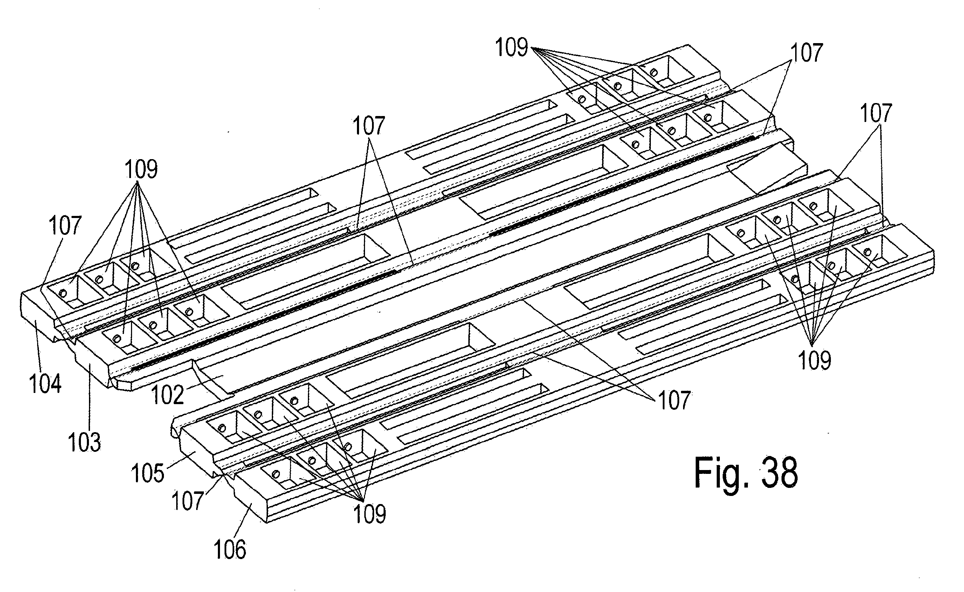

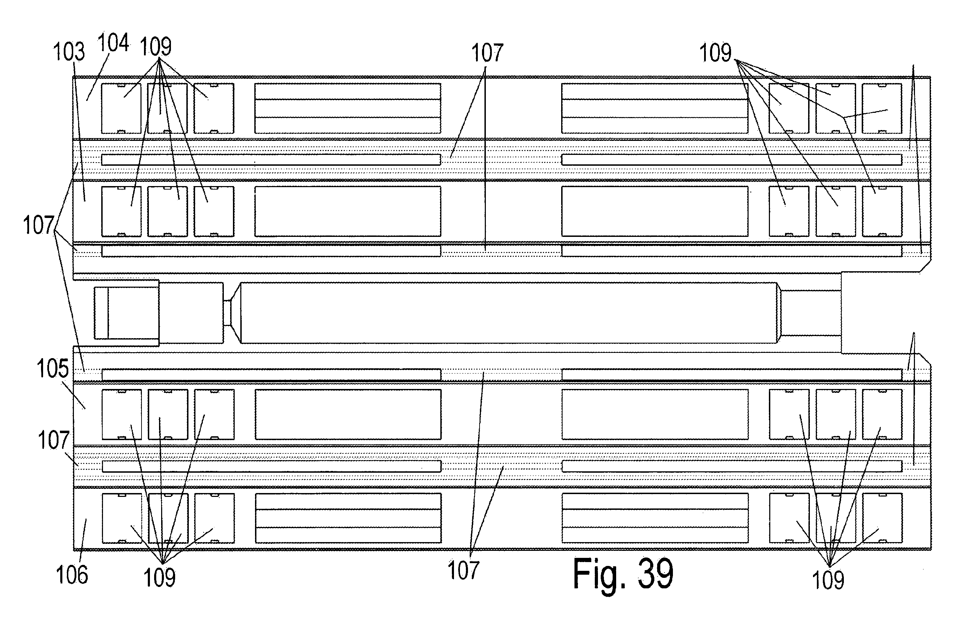

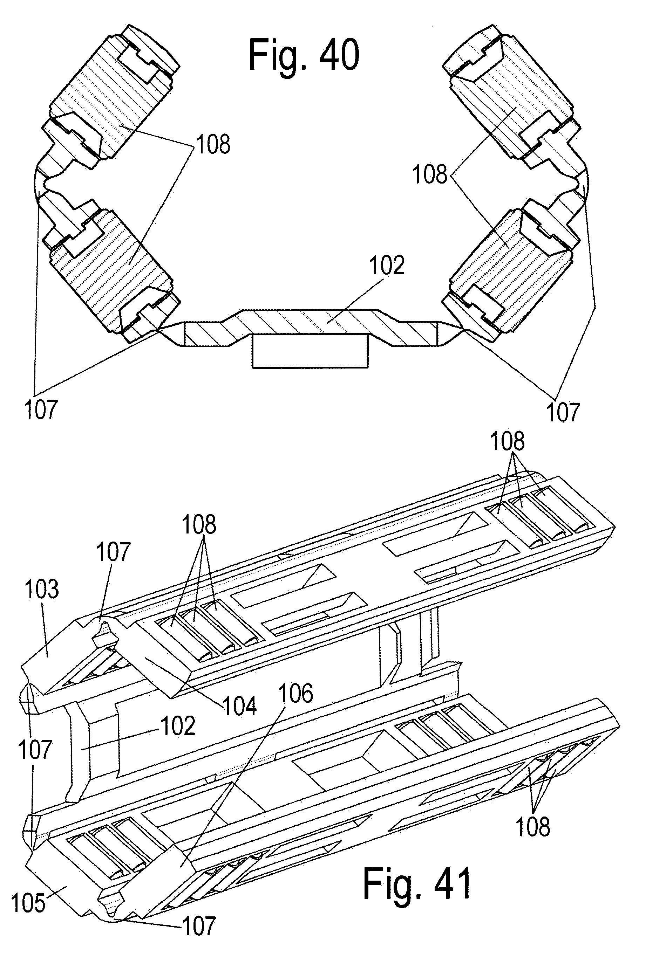

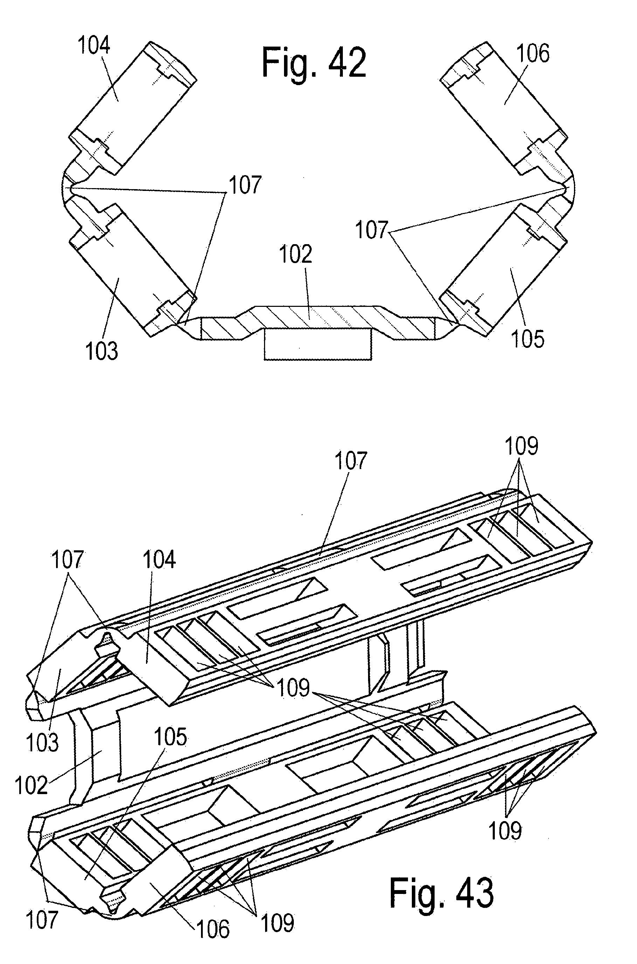

Die in den Figuren 31 bis 43 gezeigten Ausführungsformen des Wälzkörperkäfigs sind zur Aufnahme und Führung von zylinderförmigen Wälzkörpern 108 ausgebildet. Bei diesen Ausführungsformen des Wälzkörperkäfigs 1 besteht der Wälzkörperkäfig 1 jeweils aus zwei zweiteiligen Seitenwänden 103, 104 bzw. 105, 106, welche untereinander und mit einem Mittelteil 102 durch bistabile Blattfederelemente 107 miteinander verbunden sind. In den Seitenwänden 103, 104, 105, 106 sind jeweils Wälzkörperaufnahmen 109 zur Aufnahme eines Wälzkörpers vorgesehen. Auf diese Weise lassen sich diese Wälzkörperkäfige 1 in einer abgeflachten Position herstellen bzw. lagern, bestücken und anschließend durch Umbiegen der Seitenwände 103, 104, 105, 106 und damit einhergehender Verrastung in einer den Wälzkörper 1 bildenden Endstellung auf einer Möbelauszugsführung montieren.

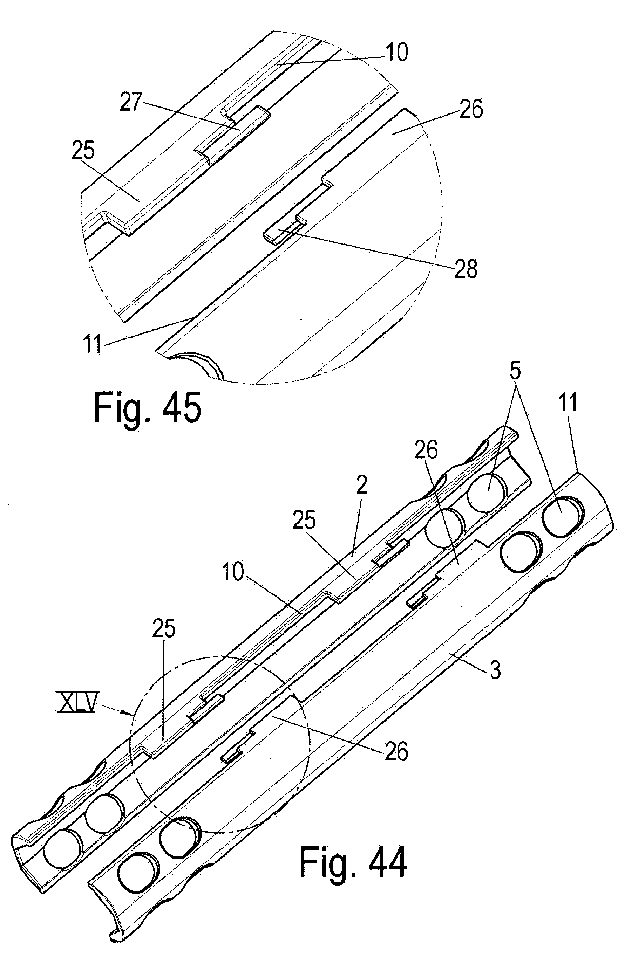

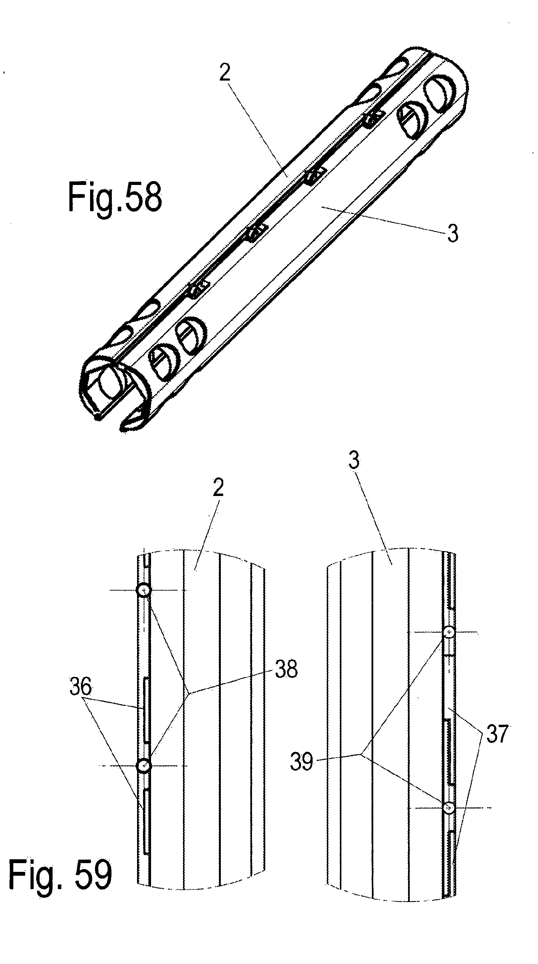

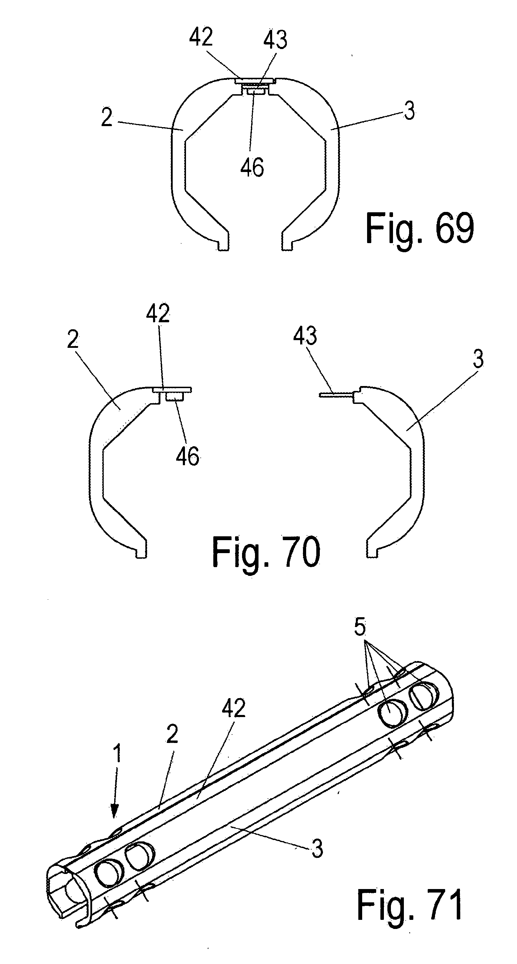

Die in den Figuren 44 bis 71 gezeigten Ausführungsformen des Wälzkörperkäfigs 1 zeichnen sich im Wesentlichen dadurch aus, dass sie aus zwei aneinander zu führenden und arretierenden Seitenwänden 2, 3 aufgebaut sind.

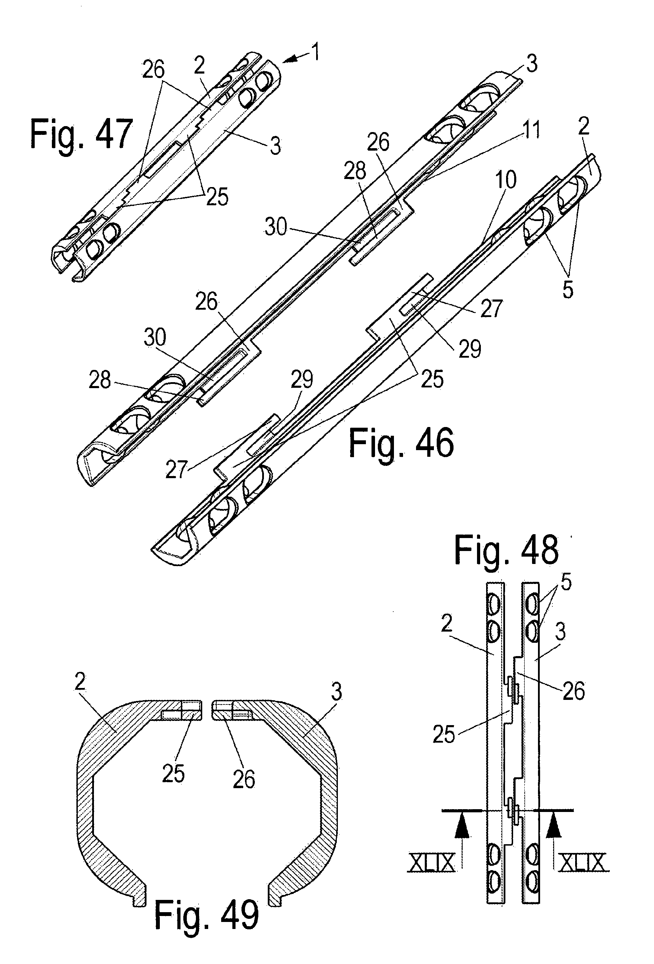

Bei der in den Figuren 44 bis 49 gezeigten Ausführungsform des Wälzkörperkäfigs 1 weisen die Seitenwände 2, 3 an mindestens einer ihrer Längskanten 10, 11 formschlüssige Rastmittel auf, mit denen die Seitenwände 2, 3 in einer den Wälzkörperkäfig 1 bildenden Endstellung miteinander als Schiebeverriegelung verrastbar sind. Diese Schiebeverriegelung ist in der Figur 45 in einer perspektivischen Ansicht von oben und in der Figur 46 in einer perspektivischen Ansicht von unten gezeigt. An einander gegenüberliegenden Längskanten 10, 11 der Seitenwände 2, 3 sind jeweils zueinander weisende Stege 25, 26 ausgebildet, welche in Stufen unterteilt unterschiedlich weit in Richtung der jeweiligen anderen Seitenwand 2, 3 hervorstehen. Wie insbesondere in der Figur 46 gezeigt, sind diese Stege 25, 26 auf ihrer Unterseite jeweils mit einer Nut 29, 30 versehen, in die jeweils ein Zahn 28, 27 an den Stegen 25, 26 im zusammengeschobenen Zustand eingreift. Durch die derart ausgebildeten Stege 25, 26 sind die beiden Seitenwände 2, 3 formstabil ineinander verrastet.

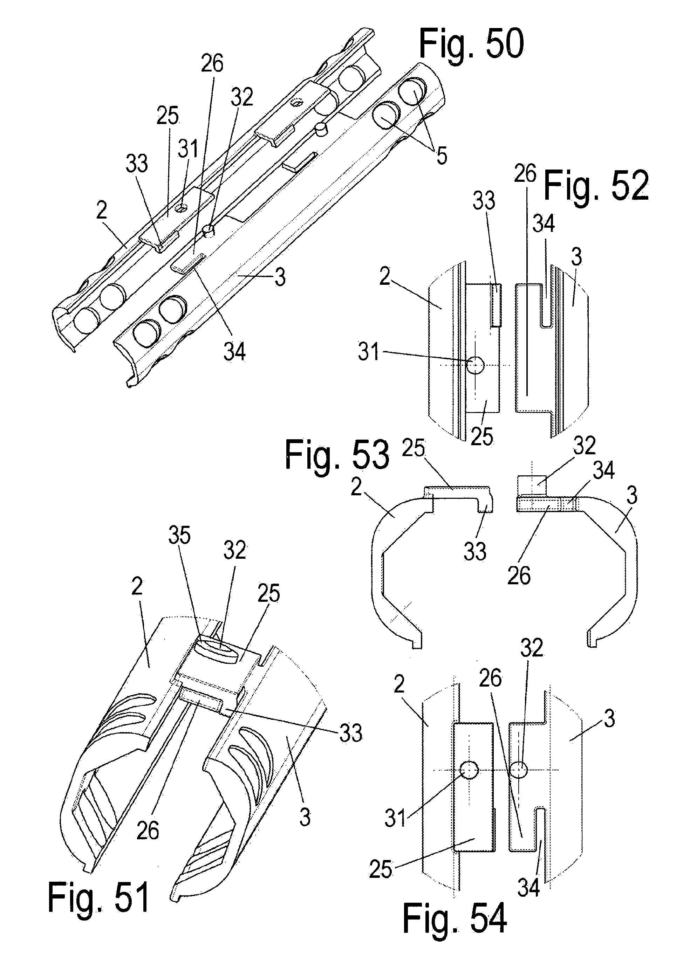

Bei der in den Figuren 50 bis 54 gezeigten Ausführungsform des erfindungsgemäßen Wälzkörperkäfigs 1 sind die Stege 25, 26 derart ausgebildet, dass in dem Steg 25 eine Öffnung 31 vorgesehen ist, in die ein Zapfen 32 im zusammengefügten Zustand der beiden Seitenwände 2, 3 ragt. Des Weiteren ist an dem Steg 25 eine nach unten, d.h. ins Innere des Wälzkörperkäfig zeigender abgewinkelter Bereich 33 vorgesehen, der in eine Nut 34 ragt, welche in dem Steg 26 entlang der Längskante der Seitenwand 3 ausgebildet ist. Dadurch ist in einfacher Weise ein radiales Zusammenfügen der beiden Seitenwände 2, 3 ermöglicht, welche so zusammengefügt in einer eine Endstellung bildenden Position des Wälzkörperkäfigs 1 verrasten. Bevorzugt ragt der Zapfen 32 über die Oberfläche des Steges 25 nach außen hinaus und wird von einem den Zapfen 32 umfassenden Ring 35 zusätzlich arretiert.

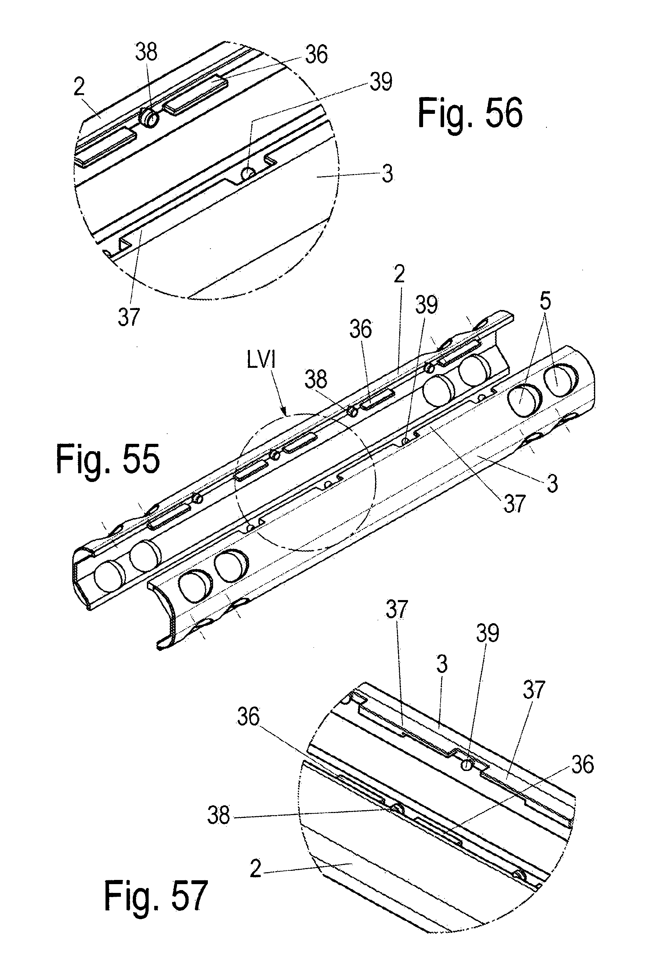

Bei der in den Figuren 55 bis 59 gezeigten Ausführungsform des erfindungsgemäßen Wälzkörperkäfigs 1 erfolgt ein Zusammenfügen der beiden Seitenwände 2, 3 durch ein Gegeneinanderdrücken der mit Rastmitteln versehenen Längskanten 10, 11 der Seitenwände 2, 3. Dazu sind entlang der Längskanten 10, 11 der Seitenwände 2, 3 jeweils Stege 36, 37 und Druckknopfteile positioniert. Die Druckknopfteile bestehen aus einem etwa kugelförmigen Kopf 39, der in einen Hohlzylinder 38 einsteckbar ist und von diesem gehalten wird. Die Stege 36, 37 sind, wie in der Figur 57 gut zu erkennen, so ausgebildet, dass der Steg 36 im zusammengefügten Zustand der beiden Seitenwände 2, 3 unter einem Teil des stufenförmig ausgebildeten Steges 37 eingeschoben ist, so dass eine radiale Bewegung der Seitenwände 2, 3 gegeneinander wirksam verhindert ist. Durch die stufenförmige Ausbildung des Steges 37 stößt der an der gegenüberliegenden Längskante 11 ausgebildete Steg 36 im unter den Steg 37 geschobenen Zustand in zumindest einer Richtung entlang der Längskanten der Seitenflächen 2, 3 an eine senkrechte Stufenwand des Steges 37, so dass auch eine Verschiebung der beiden Seitenwände 2, 3 in Längsrichtung der Längskanten 10, 11 wirksam verhindert ist.

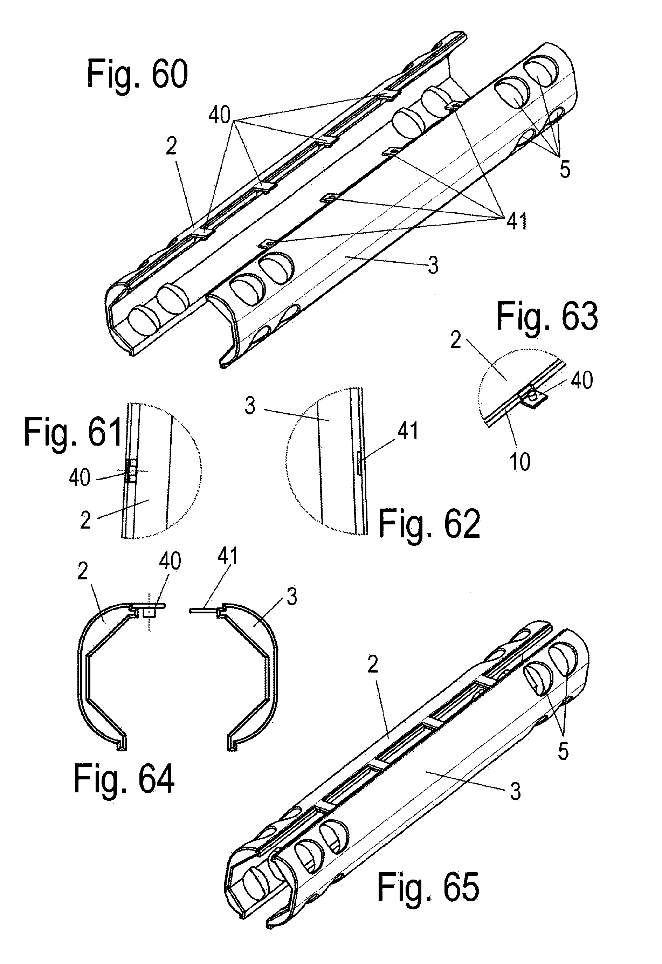

Bei der in den Figuren 60 bis 65 gezeigten Ausführungsform des erfindungsgemäßen Wälzkörperkäfigs 1 sind die Längskanten 10, 11 mit Stegen 40, 41 ausgebildet, wobei die Stege 40 auf ihrer Unterseite wiederum einen Zapfen aufweisen, der in eine Öffnung in den Stegen 41 hineinragt. Auf diese Weise ist ein Zusammenfügen der beiden Seitenwände 2, 3 in radialer Richtung ermöglicht.

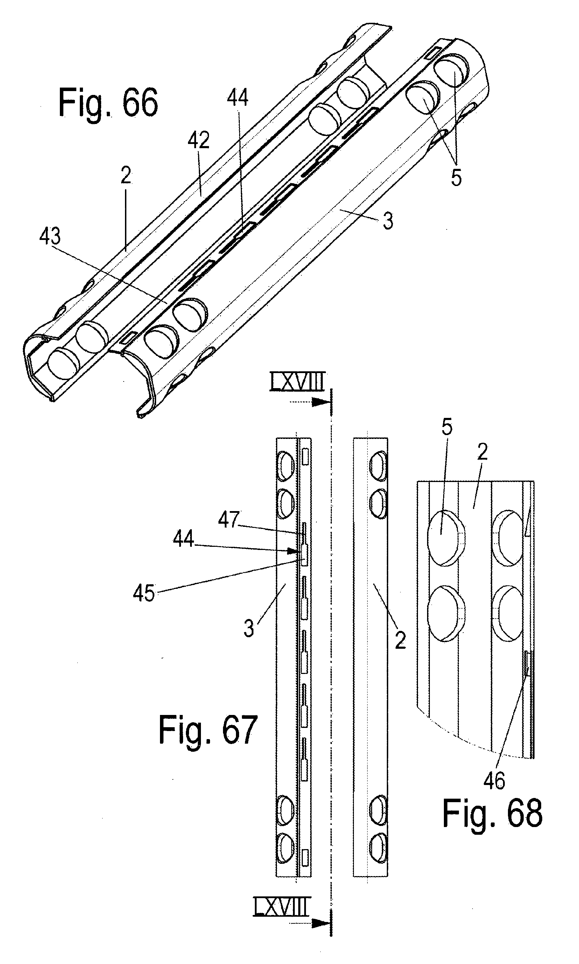

Schließlich sind die Längskanten der Seitenwände 2, 3 bei der in den Figuren 66 bis 71 gezeigten Ausführungsform des Wälzkörperkäfigs 1 mit Stegen 42, 43 ausgebildet, wobei beide Stege 42, 43 sich durchgehend entlang der Längskanten der Seitenwände 2, 3 erstrecken. Auf der ins Käfiginnere zeigenden Seite des Steges 42 sind in bevorzugt regelmäßigen Abständen Zapfen 46 vorgesehen, welche in Öffnungen 44 ragen, die in dem Steg 43 ausgebildet sind. Die Öffnungen 44 sind bevorzugt als Schlitze mit Bereichen 45, 47 unterschiedlicher Schlitzbreite ausgebildet, so dass bei einer Ausbildung des Zapfens 46 mit einem verbreiterten Zapfenkopf und einem Zapfenhals mit einem gegenüber dem Zapfenkopf kleineren Durchmesser dieser beim Zusammenführen der beiden Seitenwände zunächst radial in den breiteren Durchgangsbereich 45 eingesteckt wird und anschließend axial entlang der Längskanten 10, 11 der Seitenwände 2, 3 in den schmaleren Verriegelungsbereich 47 geschoben wird und dabei den Steg 43 von unten hintergreift.

Mit dem oben beschriebenen Aufbau des erfindungsgemäßen Wälzkörperkäfigs ist es ermöglicht, einen Wälzkörperkäfig so zu gestalten, dass eine einfache Herstellung durch einen flach liegenden bzw. beidseitig zugänglichen Aufbau ermöglicht ist. Außerdem sind mit einem solchen Wälzkörperkäfig kürzere Montagewege umsetzbar. Da dieser Wälzkörperkäfig direkt auf eine Führungs- oder Mittelschiene aufsetzbar ist und nicht erst aufgeschoben werden muss, ist auch eine gezielte Vorbefettung der Laufbahnen der Führungs- oder Mittelschiene ohne unerwünschte Verschleppung des Gleitmittels umsetzbar. Schließlich ist zumindest gemäß einem Teil der hier beschriebenen Ausführungsformen des Wälzkörperkäfigs eine Reduzierung der Bauteilvarianten möglich, da deren Formgebung erst während der Endmontage erfolgt.

### Bezugszeichenliste

- 1: Wälzkörperkäfig
- 2: Seitenwand
- 3: Seitenwand
- 4: Spalt
- 5: Aussparung
- 6: bistabiles Blattfederelement
- 7: Spalt
- 8: Filmscharnier
- 9: Flügel
- 10: Längskante
- 11: Längskante
- 12: Filmscharnier
- 13: Druckknopf
- 14: Haken
- 15: Öffnung
- 16: Längsbahn
- 17: Längsbahn
- 18: Längsbahn
- 19: Längsbahn
- 20: Längsbahn
- 21: Längsbahn
- 22: Längsbahn
- 23: Druckknopf
- 24: Druckknopf
- 25: Steg
- 26: Steg
- 27: Zahn
- 28: Zahn
- 29: Nut
- 30: Nut
- 31: Öffnung
- 32: Zapfen
- 33: abgewinkelter Bereich
- 34: Nut
- 35: Ring
- 36: Steg
- 37: Steg
- 38: Hohlzylinder
- 39: Kopf
- 40: Steg
- 41: Steg
- 42: Steg
- 43: Steg
- 44: Öffnung
- 45: Durchgangsbereich
- 46: Zapfen
- 47: Verriegelungsbereich
- 101: Wälzkörperkäfig
- 102: Mittelteil
- 103: Seitenwand
- 104: Seitenwand
- 105: Seitenwand
- 106: Seitenwand
- 107: bistabiles Blattfederelement
- 108: Wälzkörper
- 109: Wälzkörperaufnahme
- 110: Öffnung

## Patentansprüche

1. Wälzkörperkäfig für eine Möbelauszugsführung, aufweisend mindestens zwei Seitenwände (2, 3) mit Wälzkörperführungen (5), wobei die Seitenwände (2, 3) als separate Bauteile ausgebildet sind, die entlang mindestens einer ihrer Längskanten (10, 11) formschlüssige, als radial zusammen fügbare Steckverriegelung ausgebildete Rastmittel aufweisen, mit denen die Seitenwände in einer den Wälzkörperkäfig (1) bildenden Endstellung miteinander verrastbar sind, wobei die Steckverriegelung als an einander gegenüberliegenden Längskanten (10, 11) hervorstehende aufeinander legbare Stege (25, 26) ausgebildet sind, wobei mindestens einer der Stege (25, 26) eine Öffnung (31) aufweist, in die im zusammengefügten Zustand ein senkrecht auf dem Steg an der Längskante (10, 11) der gegenüberliegenden Seitenwand (26, 25) hervorstehender Zapfen (32) ragt, **dadurch gekennzeichnet, dass** der Zapfen (32) über die Oberfläche des Steges (25, 26) nach außen oder innen hinausragt.

2. Wälzkörperkäfig nach Anspruch 1, **dadurch gekennzeichnet, dass** einer der Stege an seinem der Längskante (10, 11) der gegenüberliegenden Seitenwand (2, 3) zugewandten Rand einen abgewinkelten Bereich (33) aufweist, der in eine Nut (34) in dem Steg an der Längskante (11, 10) der gegenüberliegenden Seitenwand (3, 2) eingreift.

3. Wälzkörperkäfig nach Anspruch 1, **dadurch gekennzeichnet, dass** der Zapfen (32) im Querschnitt t-förmig mit einem Zapfenkopf ausgebildet ist, der breiter als ein den Zapfenkopf mit dem Steg (42) verbindender Zapfenhals ausgebildet ist und die Öffnung (44) einen für den Zapfenkopf durchgängigen Durchgangsbereich (45) aufweist, an den sich in Richtung der Längskante (10, 11) der Seitenwände (2, 3) an einen für den Zapfenkopf nicht durchgängiger Verriegelungsbereich (47) anschließt.

4. Wälzkörperkäfig für eine Möbelauszugsführung, aufweisend mindestens zwei Seitenwände (2, 3) mit Wälzkörperführungen (5), wobei die Seitenwände (2, 3) als separate Bauteile ausgebildet sind, die entlang mindestens einer ihrer Längskanten (10, 11) formschlüssige, als radial zusammen fügbare Steckverriegelung ausgebildete Rastmittel aufweisen, mit denen die Seitenwände in einer den Wälzkörperkäfig (1) bildenden Endstellung miteinander verrastbar sind, wobei die Steckverriegelung als an einander gegenüberliegenden Längskanten (10, 11) hervorstehende aufeinander legbare Stege (25, 26) ausgebildet sind, wobei die Steckverriegelung als an einander gegenüberliegenden Längskanten hervorstehende aufeinander legbare Stege (36, 37) und neben den Stegen (36, 37) angeordneten Druckknopfteilen (38, 39) ausgebildet sind, **dadurch gekennzeichnet, dass** die Druckknopfteile(38, 39) aus einem kugelförmigen Kopf (39) auf der einen Längskante und aus einem Hohlzylinder (38) auf der gegenüberliegenden Längskante bestehen, wobei der kugelförmige Kopf (39) in den Hohlzylinder (38) einsteckbar ist.

## Claims

1. A rolling element cage for a furniture pull-out guide, comprising at least two side walls (2, 3) with rolling element guides (5), wherein the side walls (2, 3) are arranged, along at least one of their longitudinal edges (10, 11), as separate components which comprise interlocking latching means arranged as a connector latching which can be joined radially and with which the side walls can be latched onto each other in an end position forming the rolling element cage (1), wherein the connector latching is arranged as webs (25, 26) which can be placed on each other and protrude on mutually opposite longitudinal edges (10, 11), wherein at least one of the webs (25, 26) comprises an opening (31) into which protrudes, in the assembled state, a pin (32) protruding perpendicularly to the web on the longitudinal edge (10, 11) of the opposite side wall (26, 25), **characterized in that** the pin (32) protrudes beyond the surface of the web (25, 26) to the outside or the inside.

2. A rolling element cage according to claim 1, **characterized in that** one of the webs comprises an angled region (33) on its edge facing the longitudinal edge (10, 11) of the opposite side wall (2, 3), which angled region engages in a groove (34) in the web on the longitudinal edge (11, 10) of the opposite side wall (3, 2).

3. A rolling element cage according to claim 1, **characterized in that** the pin (32) is arranged in a T-shaped manner in its cross-section with a pin head which is arranged broader than a pin throat connecting the pin head the web (42), and the opening (44) comprises a passage region (45) which allows the pin head to pass and adjacent to which there is a locking region (47) in the direction of the longitudinal edge (10, 11) of the side walls (2, 3), which locking region does not allow the pin head to pass.

4. A rolling element cage for a furniture pull-out guide, comprising at least two side walls (2, 3) with rolling element guides (5), wherein the side walls (2, 3) are arranged as separate components which comprise, along at least one of their longitudinal edges (10, 11), interlocking latching means arranged as a connector latching which can be joined radially and with which the side walls can be latched onto each other in an end position forming the rolling element cage (1), wherein the connector latching is arranged as webs (25, 26) which can be placed on each other and protrude on mutually opposite longitudinal edges (10, 11), wherein the connector latching is arranged as webs (36, 37) which can be placed on each other and protrude on mutually opposite longitudinal edges (10, 11) and as press-button parts (38, 39) arranged adjacent to the webs (36, 37), **characterized in that** the press-button parts (38, 39) consist of a spherical head (39) on the one longitudinal edge and of a hollow cylinder (38) on the opposite longitudinal edge, wherein the spherical head (39) can be inserted into the hollow cylinder (38).

## Revendications

1. Cage de corps roulants pour un guidage de tiroir de meuble présentant au moins deux parois latérales (2, 3) avec des guidages de corps roulants (5), les parois latérales (2, 3) étant réalisées comme des composants séparés qui présentent le long d'au moins l'une de leurs arêtes longitudinales (10, 11) des moyens d'encliquetage réalisés sous la forme d'un verrouillage par emboîtement assemblable radialement, à complémentarité de formes, avec lesquels les parois latérales peuvent être encliquetées entre elles dans une position d'extrémité formant la cage de corps roulants (1), le verrouillage par emboîtement étant réalisé sous la forme de nervures (25, 26) pouvant être posées l'une sur l'autre, en saillie au niveau d'arêtes longitudinales (10, 11) opposées l'une à l'autre, au moins l'une des nervures (25, 26) présentant une ouverture (31), dans laquelle pénètre à l'état assemblé un tenon (32) dépassant perpendiculairement sur la nervure au niveau de l'arête longitudinale (10, 11) de la paroi latérale (26, 25) opposée, **caractérisée en ce que** le tenon (32) dépasse de la surface de la nervure (25, 26) vers l'extérieur ou l'intérieur.

2. Cage de corps roulants selon la revendication 1, **caractérisée en ce que** l'une des nervures présente sur son bord tourné vers l'arête longitudinale (10, 11) de la paroi latérale (2, 3) opposée une zone (33) coudée qui s'engage dans une rainure (34) dans la nervure au niveau de l'arête longitudinale (11, 10) de la paroi latérale (3, 2) opposée.

3. Cage de corps roulants selon la revendication 1, **caractérisée en ce que** le tenon (32) est réalisé en section transversale en forme de t avec une tête de tenon qui est réalisée plus large qu'un collet de tenon reliant la tête de tenon à la nervure (42) et l'ouverture (44) présente une zone de passage (45) continue pour la tête de tenon, à laquelle est contiguë en direction de l'arête longitudinale (10, 11) des parois latérales (2, 3) une zone de verrouillage (47) non continue pour la tête de tenon.

4. Cage de corps roulants pour un guidage de tiroir de meuble présentant au moins deux parois latérales (2, 3) avec des guidages de corps roulants (5), les parois latérales (2, 3) étant réalisées comme des composants séparés qui présentent le long d'au moins l'une de leurs arêtes longitudinales (10, 11) des moyens d'encliquetage réalisés sous la forme d'un verrouillage par emboîtement assemblable radialement, à complémentarité de formes, avec lesquels les parois latérales peuvent être encliquetées entre elles dans une position d'extrémité formant la cage de corps roulants (1), le verrouillage par emboîtement étant réalisé sous la forme de nervures (25, 26) pouvant être posées l'une sur l'autre, en saillie au niveau d'arêtes longitudinales (10, 11) opposées l'une à l'autre, le verrouillage par emboîtement étant réalisé sous la forme de nervures (36, 37) pouvant être posées l'une sur l'autre, en saillie au niveau d'arêtes longitudinales opposées l'une à l'autre, et de parties de bouton-poussoir (38, 39) agencées à côté des nervures (36, 37), **caractérisée en ce que** les parties de bouton-poussoir (38, 39) se composent d'une tête sphérique (39) sur une arête longitudinale et d'un cylindre creux (38) sur l'arête longitudinale opposée, la tête sphérique (39) pouvant être enfichée dans le cylindre creux (38).
